# EUROPEAN PATENT APPLICATION

(11) **EP 3 413 145 A1**
(43) Date of publication of application: **12.12.2018**
(21) Application number: 18168058.8
(22) Date of filing: 18.04.2018
(51) Int. Cl.: G04G 21/08, G04G 21/04, G04G 9/00

(54) **INDICATING DEVICE AND OPERATING METHOD THEREOF**

(30) Priority: 08.06.2017 TW 106119100
(71) Applicant: Princo Corp., Hsinchu 300 (TW)
(72) Inventor: CHIU, Pei-liang, 300 Hsinchu (TW)
(74) Representative: Petraz, Gilberto Luigi

(57) **Abstract**

An indicating device and an operating method thereof are disclosed. The indicating device includes a display element and a functional module. The display element includes physical scales, at least one information indicating identification disposed on the physical scales, and at least one indicator disposed on the physical scales. The functional module includes a touch detection unit configured to sense a signal change via a transparent conductive film; and a processor configured to output, according to the signal change, a command to control the at least one indicator to indicate information corresponding the at least one information indicating identification. The indicating device and the operating method thereof can display time and other information.

## Description

### TECHNICAL FIELD OF THE INVENTION

The present disclosure relates to an information indicating field, and more particularly to an indicating device and an operating method thereof.

### BACKGROUND OF THE INVENTION

Currently, a wearable device which is manufactured as a command device that can communicate with an external device (e.g., a mobile phone) is developed. For example, it is increasingly common to manufacture a smart wristwatch by disposing a wireless antenna and a functional module in a wristwatch. A chip antenna, a helix or spiral antenna, a patch antenna, or a loop antenna is usually utilized in the conventional smart wristwatch for receiving and transmitting signals. The above-mentioned antennas are a type of electromagnetic antenna. That is, the above-mentioned antennas receive and transmit signals by an electromagnetic field.

The conventional smart wristwatch usually includes a glass, a dial, a watch case, and a bottom case. The dial, the watch case, and the bottom case construct an accommodating space from top to bottom. The antenna is disposed in the accommodating space inside the smart wristwatch or in the watch case. However, the dial, the watch case, and the bottom case of the conventional smart wristwatch are generally made of metal. The metal has the characteristics of shielding signals. Accordingly, the signals received or transmitted by the antenna disposed in the accommodating space or in the watch case of the conventional smart wristwatch are affected by the watch case, the bottom case, and the dial which are made of metal.

Even if at least one of the dial, the watch case, and the bottom case constructing the accommodating space is not made of metal or a part of at least one of the dial, the watch case, and the bottom case is not made of metal, the antenna is still affected by the objects (the watch case, the bottom case, and the dial) constructing the accommodating space, a movement, a functional module, or a battery in the accommodating space, because the antenna is disposed in the accommodating space or in the watch case. As a result, a wireless communication distance between the antenna and an external device (e.g., a mobile phone) is significantly reduced.

Furthermore, a conventional wristwatch does not include a touch screen and does not have an electronic knob (a button). Even if the conventional wristwatch is attached with various communicating and operating modules or sensors, the conventional wristwatch only can display time via a time display element. The conventional wristwatch does not have a function of displaying any other information, for example, a sensing result of a sensor. That is, a user cannot acquire information that he/she wants from the conventional wristwatch. For example, when plural sensors or a processor is disposed in the conventional wristwatch for providing a step counting function, the conventional wristwatch cannot provide a suitable method to display step counting data.

Consequently, there is a need to solve the above-mentioned problems in the prior art.

### SUMMARY OF THE INVENTION

An objective of the present disclosure is to provide an indicating device and an operating method thereof which can solve the problems in the prior art.

The indicating device of the present disclosure includes a top cover; a housing; a bottom cover, the top cover, the housing, and the bottom cover defining an accommodating space from top to bottom; a transparent conductive film formed on a lower surface of the top cover, wherein a combination of the top cover and the transparent conductive film does not display an image; a display element disposed in the accommodating space and including physical scales, at least one information indicating identification disposed on the physical scales, and at least one indicator disposed on the physical scales; and a functional module disposed in the accommodating space and including a touch detection unit configured to sense a signal change via the transparent conductive film, wherein the signal change is generated by an action performed on the top cover or above the top cover; and a processor configured to output, according to the signal change sensed by the touch detection unit, a command to control the at least one indicator to indicate information corresponding to the at least one information indicating identification.

The indicating device of the present disclosure includes a top cover; a housing; a bottom cover, the top cover, the housing, and the bottom cover defining an accommodating space from top to bottom; a transparent conductive film formed on a lower surface of the top cover, wherein a combination of the top cover and the transparent conductive film does not display an image; a display element disposed in the accommodating space and including physical scales, at least one information indicating identification disposed on the physical scales, and at least one indicator disposed on the physical scales; and a functional module disposed in the accommodating space and including at least one sensor configured to sense a gesture performed on the indicating device; and a processor configured to output, according to the gesture sensed by the at least one sensor, a command to control the at least one indicator to indicate information corresponding to the at least one information indicating identification.

The indicating device of the present disclosure includes a top cover; a housing; a bottom cover, the top cover, the housing, and the bottom cover defining an accommodating space from top to bottom; a transparent conductive film formed on a lower surface of the top cover, wherein a combination of the top cover and the transparent conductive film does not display an image; a display element disposed in the accommodating space and including physical scales, at least one information indicating identification disposed on the physical scales, and at least one indicator disposed on the physical scales; and a functional module disposed in the accommodating space and including a wireless communication unit configured to wirelessly communicate with a mobile terminal via the transparent conductive film; a touch detection unit configured to sense a signal change via the transparent conductive film, wherein the signal change is generated by an action performed on the top cover or above the top cover; at least one sensor configured to sense a gesture performed on the indicating device; and a processor configured to output, according to the signal change or the gesture, a command to control the at least one indicator to indicate information corresponding to the at least one information indicating identification.

In the operating method of the indicating device, the indicating device includes a top cover, a housing, a bottom cover, a transparent conductive film, a display element, and a functional module. The top cover, the housing, and the bottom cover define an accommodating space from top to bottom. The transparent conductive film is formed on a lower surface of the top cover. The display element is disposed in the accommodating space and includes physical scales, at least one information indicating identification disposed on the physical scales, and at least one indicator disposed on the physical scales. The functional module includes a touch detection unit and a processor. The operating method of the indicating device includes sensing a signal change via the transparent conductive film by the touch detection unit, wherein the signal change is generated by an action performed on or above the top cover; and outputting, according to the signal change sensed by the touch detection unit, a command to control the at least one indicator to indicate information corresponding to the at least one information indicating identification by the processor.

In the operating method of the indicating device, the indicating device includes a top cover, a housing, a bottom cover, a transparent conductive film, a display element, and a functional module. The top cover, the housing, and the bottom cover define an accommodating space from top to bottom. The transparent conductive film is formed on a lower surface of the top cover. The display element is disposed in the accommodating space and includes physical scales, at least one information indicating identification disposed on the physical scales, and at least one indicator disposed on the physical scales. The functional module includes at least one sensor and a processor. The operating method of the indicating device includes sensing a gesture performed on the indicating device by the at least one sensor; and outputting, according to the gesture sensed by the at least one sensor, a command to control the at least one indicator to indicate information corresponding to the at least one information indicating identification by the processor.

In the indicating device of the present disclosure and the operating method thereof, since the at least one information indicating identification is disposed, the indicating device can display time and other information.

### BRIEF DESCRIPTION OF THE DRAWINGS

FIG. 1 illustrates a top view of an indicating device in accordance with an embodiment of the present disclosure.
FIG. 2 illustrates an exploded view of the indicating device shown in FIG. 1.
FIG. 3 illustrates a sectional view of the indicating device shown in FIG. 1.
FIG. 4 illustrates a wireless communication between the controlling unit and a mobile terminal in accordance with an embodiment of the present disclosure.
FIG. 5 illustrates information indicating identifications in accordance with an embodiment of the present disclosure.
FIG. 6 illustrates information indicating identifications in accordance with another embodiment of the present disclosure.
FIG. 7 illustrates that the transparent conductive film is adhered to the top cover in accordance with an embodiment of the present disclosure.
FIG. 8 illustrates an enlarged view of an area A in FIG. 7.
FIG. 9 illustrates a flowchart of an operating method of an indicating device in accordance with an embodiment of the present disclosure.
FIG. 10 illustrates a flowchart of an operating method of an indicating device in accordance with another embodiment of the present disclosure.

### DETAILED DESCRIPTION OF THE INVENTION

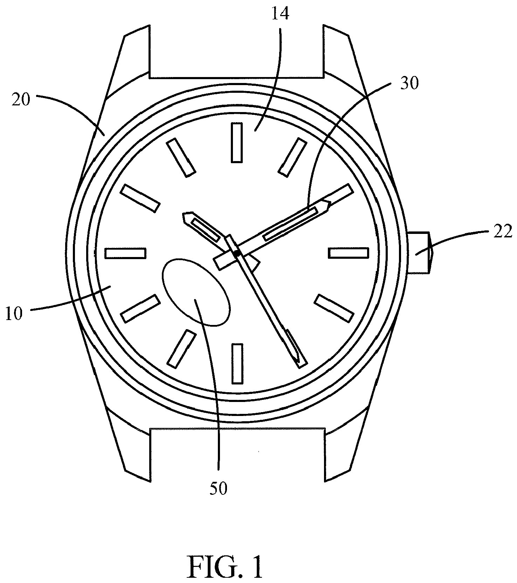

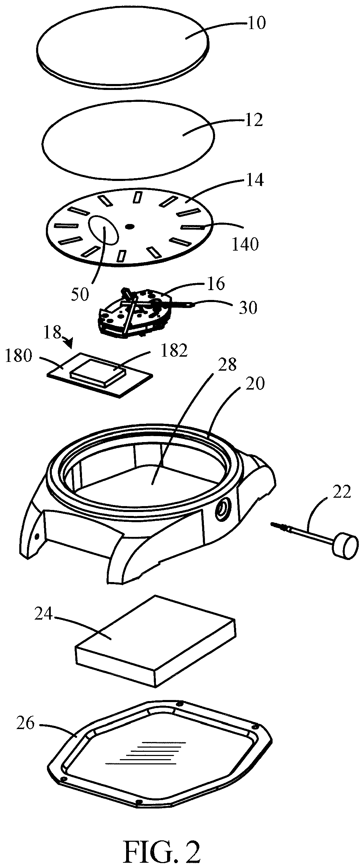

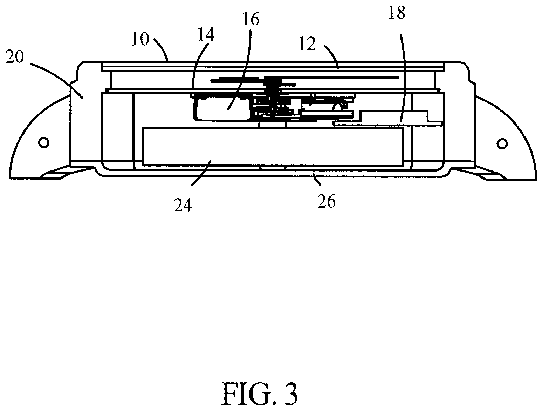

The present disclosure provides an indicating device. The indicating device includes a short distance communication module disposed therein. The indicating device may be but not limited to a wristwatch. Please refer to FIG. 1 to FIG. 3. FIG. 1 illustrates a top view of an indicating device in accordance with an embodiment of the present disclosure. FIG. 2 illustrates an exploded view of the indicating device shown in FIG. 1. FIG. 3 illustrates a sectional view of the indicating device shown in FIG. 1.

The indicating device includes a top cover 10, a transparent conductive film 12, a display element 14, a movement 16, a functional module 18, a housing 20, a crown 22, a battery 24, and a bottom cover 26.

The top cover 10, the housing 20, and the bottom cover 26 define an accommodating space 28 from top to bottom. The top cover 10, the housing 20, and the bottom cover 26 are configured to protect mechanical structures and/or electronic devices inside the indicating device.

Preferably, the top cover 10 is a transparent material (e.g., a glass). The transparent conductive film 12 is formed on and adhered to a lower surface of the top cover 10. It is noted that the transparent conductive film 12 has a short distance communication function. Preferably, the transparent conductive film 12 has a high light transmittance structure. After the transparent conductive film 12 is formed on the lower surface of the top cover 10, a structure formed by the top cover 10 and the transparent conductive film 12 still has a transmittance greater than 50%. Accordingly, when a user checks the time through the top cover 10, the user is not affected by the transparent conductive film 12.

In the present embodiment, the display element 14 is disposed in the accommodating space 28 and positioned on the functional module 18. The display element 14 includes physical scales 140 (e.g., one o'clock to twelve o'clock), at least one information indicating identification 50 disposed on the physical scales 140, and at least one indicator 30 (e.g., physical hands including an hour hand, a minute hand, and a second hand) disposed on the physical scales 140. The at least one indicator 30 is driven by the movement 16 and cooperates with the physical scales 140 of the display element 14 to show the time. Furthermore, a feature of the present disclosure is that the at least one indicator 30 can indicate, via the at least one information indicating identification 50, information excluded the time. The information excluded the time includes but is not limited to a completion rate of exercise goal, a height, a direction, a speed, and so on. The at least one information indicating identification 50 includes but is not limited to at least one of a number, a word, a pattern, and a sign.

It is noted that in the present embodiment, the indicating device is a watch including the at least one indicator 30, and the display element 14 is a dial. The at least one indicator 30 and the movement 16 are driven by respective motors. When the at least one indicator 30 includes an hour hand, a minute hand, and a second hand, the hour hand, the minute hand, and the second hand are driven by respective motors.

The crown 22 is disposed at the lateral side of the indicating device. The user can adjust the correct time or set an alarm by turning a knob on the crown 22.

The battery 24 can provide the power required by the movement 16 and/or the functional module 18. The battery 24 may be a primary battery or a secondary battery.

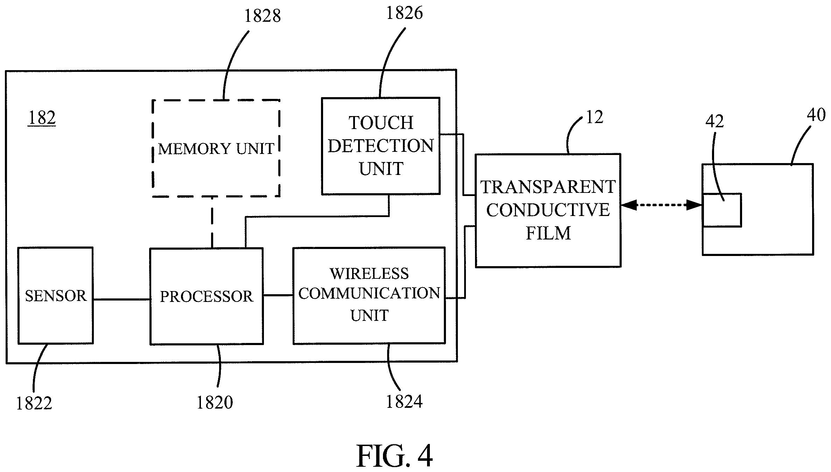

The functional module 18 is disposed in the accommodating space 28. As shown in FIG. 2, the functional module 18 includes an electrical connection substrate 180 and a controlling unit 182 disposed on the electrical connection substrate 180. Please refer to FIG. 4. FIG. 4 illustrates a wireless communication between the controlling unit 182 and a mobile terminal 40 in accordance with an embodiment of the present disclosure. The controlling unit 182 of the present disclosure includes a processor 1820, at least one sensor 1822, a wireless communication unit 1824, and a touch detection unit 1826.

The wireless communication unit 1824 is electrically connected to the processor 1820 and configured to wirelessly communicate with the mobile terminal 40 via the transparent conductive film 12. The mobile terminal 40 has a wireless signal transceiver 42 for receiving and transmitting wireless signals. For example, the wireless signal transceiver 42 may be a BLUETOOTH transceiver or a near field communication (NFC) transceiver. It is noted that when the indicating device is a wristwatch structure, the functional module 18 can also be deployed on a watch strap of the wristwatch structure.

The at least one sensor 1822 is electrically connected to the processor 1820 and configured to sense a gesture performed on the indicating device. The gesture, for example, a click action, a sliding action, or a vibration.

The functional module 18 may also include a memory unit 1828. The memory unit 1828 is configured to store the data required by the processor 1820. Also, the memory unit 1828 can be integrated into the processor 1820.

The touch detection unit 1826 is electrically connected to the transparent conductive film 12 and the processor 1820. When the user performs an action on or above the top cover 10 in FIG. 2 (e.g., clicks the top cover 10 or slides on the top cover 10), the touch detection unit 1826 is configured to sense a signal change (e.g., a current change) via the transparent conductive film 12. The signal change is generated by the action performed on or above the top cover 10. The processor 1820 is configured to receive the signal change and output a command according to the signal change to control the at least one indicator 30 to indicate information corresponding to the at least one information indicating identification 50.

Alternatively, the at least one sensor 1822 is configured to sense a gesture performed on the indicating device (e.g., the user clicks the top cover 10 or slides on the top cover 10). The processor 1820 is configured to output a command according to the gesture to control the at least one indicator 30 to indicate information corresponding to the at least one information indicating identification 50.

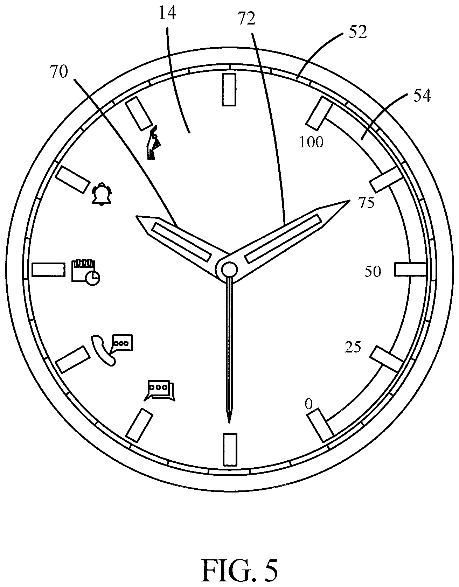

Please refer to FIG. 5. FIG. 5 illustrates information indicating identifications 52 and 54 in accordance with an embodiment of the present disclosure.

In the present embodiment, the indicating device can respond to the action or the gesture performed on the top cover 10. For example, when the user performs a "=" mark to the top cover 10 to inquire the date, positions of an hour hand 70 and a minute hand 72 for indicating the time can be changed to positions for indicating the date. In the present embodiment, the hour hand 70 indicates a position representing "10 o'clock", and the minute hand 72 indicates a position representing "10 minute" which corresponds to a fifth scale in the information indicating identification 52. That is, the hour hand 70 and the minute hand 72 indicate "October, 5". Then, after a predetermined time (e.g., 2 seconds), the positions of the hour hand 70 and the minute hand 72 for indicating the date can be back to the positions of the hour hand 70 and the minute hand 72 for indicating the time. Furthermore, numerals may be added to thirty one scales in the information indicating identification 52, so that the thirty one scales can be displayed more intuitively.

Furthermore, the information indicating identification 54 may display a completion rate of step counting per day (0%-100%).

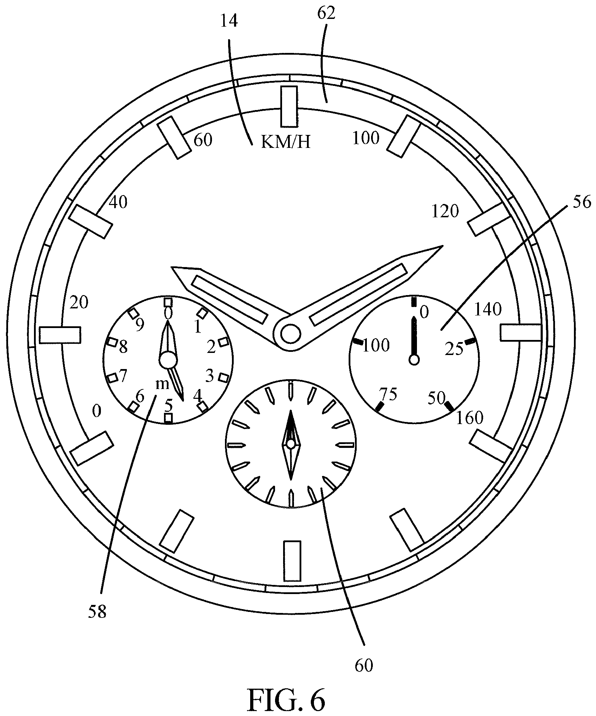

Please refer to FIG. 6. FIG. 6 illustrates information indicating identifications 56, 58, 60, and 62 in accordance with another embodiment of the present disclosure.

In the present embodiment, the information indicating identification 56 is configured to indicate a completion rate of exercise goal. The information indicating identification 58 is configured to indicate a height. The information indicating identification 60 is configured to indicate a direction. The information indicating identification 62 is configured to indicate a speed. The processor 1820 may output, according to the signal change sensed by the touch detection unit 1826 or the gesture sensed by the at least one sensor 1822, a command to control the at least one indicator 30 to indicate information corresponding to the information indicating identifications 56, 58, 60, and 62.

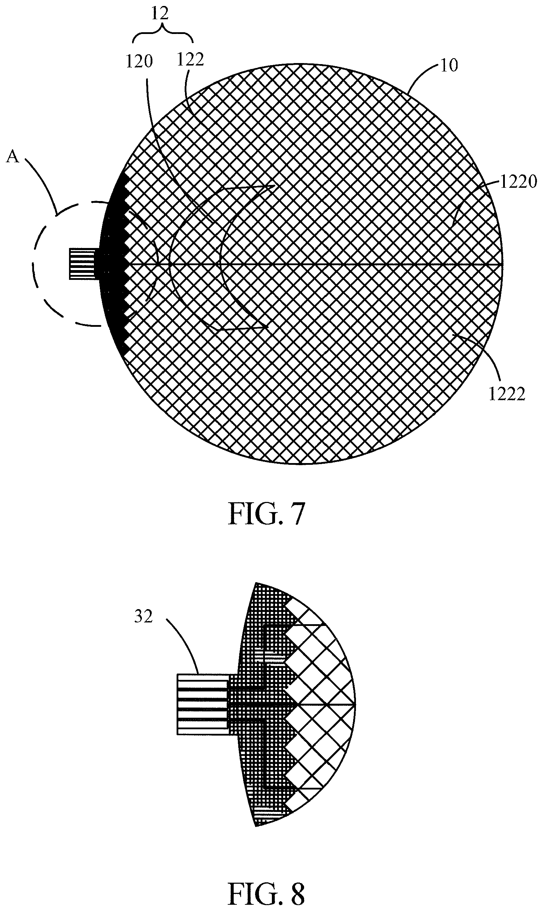

As mentioned above, the transparent conductive film 12 is configured to sense the signal change. Please refer to FIG. 7 and FIG. 8. FIG. 7 illustrates that the transparent conductive film 12 is adhered to the top cover 10 in accordance with an embodiment of the present disclosure. FIG. 8 illustrates an enlarged view of an area A in FIG. 7.

As shown in FIG. 7, the transparent conductive film 12 is a conductive film formed in a mesh shape. In practice, the mesh shape is formed by a plurality of ultra-fine metal lines. Accordingly, the user does not see the transparent conductive film 12 in the mesh shape. The transparent conductive film 12 which the user sees is approximately transparent.

The transparent conductive film 12 may include a communication part 120 and a sensing part 122. The communication part 120 is formed on and adhered to a part of the lower surface of the top cover 10. The sensing part 122 is formed on and adhered to a remaining part of the lower surface of the top cover 10. The communication part 120 and the sensing part 122 are electrically disconnected from each other. The communication part 120 is electrically connected between the wireless communication unit 1824 and the mobile terminal 40 and configured to transmit and receive signals between the wireless communication unit 1824 and the mobile terminal 40. The sensing part 122 is electrically connected to the touch detection unit 1826 and configured to transmit the signal change (e.g., the current change) to the touch detection unit 1826 in FIG. 4 via a signal transmitting part 32.

A method for manufacturing the communication part 120 and the sensing part 122 is to form a complete conductive film on the lower surface of the top cover 10 firstly. Then, the complete conductive film is split into the communication part 120 and the sensing part 122 by laser patterning. A slit is formed between the communication part 120 and the sensing part 122. The communication part 120 and the sensing part 122 are not affected by each other.

Furthermore, the sensing part 122 is split into a first area 1220 and a second area 1222. The first area 1220 and the second area 1222 are electrically disconnected from each other. When the user slides from the first area 1220 to the second area 1222, the sensing part 122 in the first area 1220 can transmit a signal change to the touch detection unit 1826, and the sensing part in the second area 1222 can transmit a signal change to the touch detection unit 1826. The processor 1820 analyzes the two signal changes and outputs a corresponding command according to the signal changes. For example, when the user touches the top cover 10 over 2 seconds, the processor 1820 outputs a corresponding command to the wireless communication unit 1824. The wireless communication unit 1824 controls the mobile terminal 40 to dial via the communication part 120.

In another embodiment, the sensing part 122 is not split into the two areas, and the sensing part 122 includes only one area. In yet another embodiment, the sensing part 122 may be split into a plurality of areas which are electrically disconnected from each other or one another. The areas may be the same size or different sizes.

It is noted that a combination of the top cover 10 and the transparent conductive film 12 does not display an image. Specifically, an operation principle of the indicating device of the present disclosure is different from that of a liquid crystal display device or a touch device.

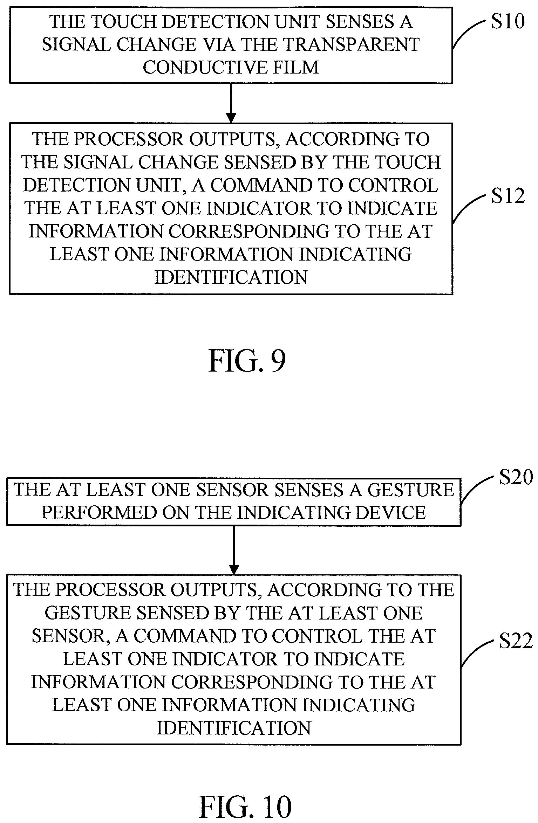

Please refer to FIG. 9. FIG. 9 illustrates a flowchart of an operating method of an indicating device in accordance with an embodiment of the present disclosure.

The indicating device includes a top cover, a housing, a bottom cover, a transparent conductive film, a display element, and a functional module. The top cover, the housing, and the bottom cover define an accommodating space from top to bottom. The transparent conductive film is formed on and adhered to a lower surface of the top cover. The display element is disposed in the accommodating space and includes physical scales, at least one information indicating identification disposed on the physical scales, and at least one indicator disposed on the physical scales. The functional module includes a touch detection unit and a processor. The operating method of the indicating device includes the following operations.

In operation S10, the touch detection unit senses a signal change via the transparent conductive film. The signal change is generated by an action performed on or above the top cover.

In operation S12, the processor outputs, according to the signal change sensed by the touch detection unit, a command to control the at least one indicator to indicate information corresponding to the at least one information indicating identification.

The at least one information indicating identification includes at least one of a number, a word, a pattern, and a sign.

Please refer to FIG. 10. FIG. 10 illustrates a flowchart of an operating method of an indicating device in accordance with another embodiment of the present disclosure.

The indicating device includes a top cover, a housing, a bottom cover, a transparent conductive film, a display element, and a functional module. The top cover, the housing, and the bottom cover define an accommodating space from top to bottom. The transparent conductive film is formed on and adhered to a lower surface of the top cover. The display element is disposed in the accommodating space and includes physical scales, at least one information indicating identification disposed on the physical scales, and at least one indicator disposed on the physical scales. The functional module includes at least one sensor and a processor. The operating method of the indicating device includes the following operations.

In operation S20, the at least one sensor senses a gesture performed on the indicating device.

In operation S22, the processor outputs, according to the gesture sensed by the at least one sensor, a command to control the at least one indicator to indicate information corresponding to the at least one information indicating identification.

The at least one information indicating identification includes at least one of a number, a word, a pattern, and a sign.

In the indicating device of the present disclosure and the operating method thereof, since the at least one information indicating identification is disposed, the indicating device can display time and other information.

While the preferred embodiments of the present disclosure have been illustrated and described in detail, various modifications and alterations can be made by persons skilled in this art. The embodiment of the present disclosure is therefore described in an illustrative but not restrictive sense. It is intended that the present disclosure should not be limited to the particular forms as illustrated, and that all modifications and alterations which maintain the realm of the present disclosure are within the scope as defined in the appended claims.

## Claims

1. An indicating device, **characterized by** comprising:
a top cover (10);
a housing (20);
a bottom cover (26), the top cover (10), the housing (20), and the bottom cover (26) defining an accommodating space (28) from top to bottom;
a transparent conductive film (12) formed on a lower surface of the top cover (10), wherein a combination of the top cover (10) and the transparent conductive film (12) does not display an image;
a display element (14) disposed in the accommodating space (28) and comprising physical scales (140), at least one information indicating identification (50, 52, 54, 56, 58, 60, 62) disposed on the physical scales (140), and at least one indicator (30) disposed on the physical scales (140); and
a functional module (18) disposed in the accommodating space (28) and comprising:
a touch detection unit (1826) configured to sense a signal change via the transparent conductive film (12), wherein the signal change is generated by an action performed on the top cover (10) or above the top cover (10); and
a processor (1820) configured to output, according to the signal change sensed by the touch detection unit (1826), a command to control the at least one indicator (30) to indicate information corresponding to the at least one information indicating identification (50, 52, 54, 56, 58, 60, 62).

2. The indicating device according to claim 1, **characterized in that** the transparent conductive film (12) comprises:
a communication part (120) formed on a part of the lower surface of the top cover (10); and
a sensing part (122) formed on a remaining part of the lower surface of the top cover (10).

3. The indicating device according to claim 2, **characterized in that** the sensing part (122) are split into a plurality of areas which are electrically disconnected from each other or one another.

4. The indicating device according to claim 1, **characterized in that** the at least one information indicating identification (50, 52, 54, 56, 58, 60, 62) comprises at least one of a number, a word, a pattern, and a sign.

5. An indicating device, **characterized by** comprising:
a top cover (10);
a housing (20);
a bottom cover (26), the top cover (10), the housing (20), and the bottom cover (26) defining an accommodating space (28) from top to bottom;
a transparent conductive film (12) formed on a lower surface of the top cover (10), wherein a combination of the top cover (10) and the transparent conductive film (12) does not display an image;
a display element (14) disposed in the accommodating space (28) and comprising physical scales (140), at least one information indicating identification (50, 52, 54, 56, 58, 60, 62) disposed on the physical scales (140), and at least one indicator (30) disposed on the physical scales (140); and
a functional module (18) disposed in the accommodating space (28) and comprising:
at least one sensor (1822) configured to sense a gesture performed on the indicating device; and
a processor (1820) configured to output, according to the gesture sensed by the at least one sensor (1826), a command to control the at least one indicator (30) to indicate information corresponding to the at least one information indicating identification (50, 52, 54, 56, 58, 60, 62).

6. The indicating device according to claim 5, **characterized in that** the at least one information indicating identification (50, 52, 54, 56, 58, 60, 62) comprises at least one of a number, a word, a pattern, and a sign.

7. An indicating device, **characterized by** comprising:
a top cover (10);
a housing (20);
a bottom cover (26), the top cover (10), the housing (20), and the bottom cover (26) defining an accommodating space (28) from top to bottom;
a transparent conductive film (12) formed on a lower surface of the top cover (10), wherein a combination of the top cover (10) and the transparent conductive film (12) does not display an image;
a display element (14) disposed in the accommodating space (28) and comprising physical scales (140), at least one information indicating identification (50, 52, 54, 56, 58, 60, 62) disposed on the physical scales (140), and at least one indicator (30) disposed on the physical scales (140); and
a functional module (18) disposed in the accommodating space (28) and comprising:
a wireless communication unit (1824) configured to wirelessly communicate with a mobile terminal (40) via the transparent conductive film (12);
a touch detection unit (1826) configured to sense a signal change via the transparent conductive film (12), wherein the signal change is generated by an action performed on the top cover (10) or above the top cover (10);
at least one sensor (1822) configured to sense a gesture performed on the indicating device; and
a processor (1820) configured to output, according to the signal change or the gesture, a command to control the at least one indicator (30) to indicate information corresponding to the at least one information indicating identification (50, 52, 54, 56, 58, 60, 62).

8. The indicating device according to claim 7, **characterized in that** the at least one information indicating identification (50, 52, 54, 56, 58, 60, 62) comprises at least one of a number, a word, a pattern, and a sign.

9. An operating method of an indicating device, the indicating device comprising a top cover (10), a housing (20), a bottom cover (26), a transparent conductive film (12), a display element (14), and a functional module (18), the top cover (10), the housing (20), and the bottom cover (26) defining an accommodating space (28) from top to bottom, the transparent conductive film (12) formed on a lower surface of the top cover (10), the display element (14) disposed in the accommodating space (28) and comprising physical scales (140), at least one information indicating identification (50, 52, 54, 56, 58, 60, 62) disposed on the physical scales (140), and at least one indicator (30) disposed on the physical scales (140), the functional module (18)comprising a touch detection unit (1826) and a processor (1820), **characterized in that** the operating method of the indicating device comprises:
sensing a signal change via the transparent conductive film (12) by the touch detection unit (1826), wherein the signal change is generated by an action performed on or above the top cover (10); and
outputting, according to the signal change sensed by the touch detection unit (1826), a command to control the at least one indicator (30) to indicate information corresponding to the at least one information indicating identification (50, 52, 54, 56, 58, 60, 62) by the processor (1820).

10. The operating method of the indicating device according to claim 9, **characterized in that** the at least one information indicating identification (50, 52, 54, 56, 58, 60, 62) comprises at least one of a number, a word, a pattern, and a sign.

11. An operating method of an indicating device, the indicating device comprising a top cover (10), a housing (20), a bottom cover (26), a transparent conductive film (12), a display element (14), and a functional module (18), the top cover (10), the housing (20), and the bottom cover (26) defining an accommodating space (28) from top to bottom, the transparent conductive film (12) formed on a lower surface of the top cover (10), the display element (14) disposed in the accommodating space (28) and comprising physical scales (140), at least one information indicating identification (50, 52, 54, 56, 58, 60, 62) disposed on the physical scales (140), and at least one indicator (30) disposed on the physical scales (140), the functional module (18) comprising at least one sensor (1822) and a processor (1820), **characterized in that** the operating method of the indicating device comprises:
sensing a gesture performed on the indicating device by the at least one sensor (1822); and
outputting, according to the gesture sensed by the at least one sensor (1822), a command to control the at least one indicator (30) to indicate information corresponding to the at least one information indicating identification (50, 52, 54, 56, 58, 60, 62) by the processor (1820).

12. The operating method of the indicating device according to claim 11, **characterized in that** the at least one information indicating identification (50, 52, 54, 56, 58, 60, 62) comprises at least one of a number, a word, a pattern, and a sign.
